# EUROPEAN PATENT APPLICATION

(11) **EP 4 775 008 A1**
(43) Date of publication of application: **15.07.2026**
(21) Application number: 26150325.4
(22) Date of filing: 06.01.2026
(51) Int. Cl.: A01C 7/04, A01C 7/10, A01G 9/08

(54) **SEEDING SYSTEM COMPRISING A SEEDING DRUM, AND ASSEMBLY FOR SUCH A SEEDING SYSTEM**

(30) Priority: 09.01.2025 NL 2039566
(71) Applicant: Flier Systems B.V., 2991 LJ Barendrecht (NL)
(72) Inventor: GOUDSWAARD, Jacobus Adrianus, 2991 LJ BARENDRECHT (NL)
(74) Representative: Dogio Patents B.V.

(57) **Abstract**

Seeding system (100; 200), comprising:
a hopper (110; 210), for holding a plurality of seeds (30);
a seeding drum (120; 220) comprising rows of through-openings and arranged for picking up seeds from the hopper during rotation of the seeding drum relative to the hopper, such that the seeds are held on an outer surface of the drum by a vacuum force exerted on the seeds through the through-openings;
a detector for detecting, for a row of through-openings that is arranged in a seed detection area (α4), a number of said through-openings which hold at least one seed; and
a row discard mechanism (160; 260) adapted for, upon receipt of a row discard signal, discarding all seeds held on a row of through-openings at a discard area (α6) by providing a positive air pressure at said row of through-openings from an interior side of the drum, and otherwise for holding the seeds at said row by means of vacuum suction, wherein the discard area (α6) is arranged, along the direction of rotation, between the seed pickup area (α1) and a seed depositing area (α8) where the seeds held on the drum may be deposited at locations that are substantially predetermined relative to the hopper;
a controller (170; 270), adapted for transmitting the row discard signal to the row discard mechanism (160; 260) depending on the number detected by the detector for said row of through-openings when the row was at the seed detecting area (α4).

## Description

### Field of the invention

The present invention relates to a seeding system comprising a seeding drum, in particular for placing seeds, e.g. at most one seed, at corresponding individual locations of a tray or support surface that is moveable with respect to an axis of rotation of the seeding drum. The tray or support surface is typically supported on a conveyor of the seeding system. The seeding system of the invention allows a seed pattern on the seeding drum to be checked, so that it may be ensured that a correct number of seeds is deposited at each of the individual locations on the tray or support surface. The invention further relates to an assembly for such a seeding system, the assembly comprising a seeding drum and an air divider block.

### Background of the invention

When placing seeds at predetermined positions in a tray, e.g. in a substrate present in a tray, or on a support surface, using a seeding drum, it is desirable that substantially all positions of the tray or surface where a seed is to be planted, is indeed actually provided with a seed. In case one or more of the positions is not provided with a seed, this will typically become apparent days or weeks later, e.g. when it can be seen that no plant has developed at one or more positions of the tray or surface. To reduce the risk of incompletely seeding a tray, a seed correction assembly or the like may be provided, for placing seeds at those positions where the seeder has failed to deposit a seed. For instance, US patent application publication no. US 2021/0195829A1 describes an automated seed planter, which includes at least two vacuum cylinders which simultaneously and / or independently pick up and deliver seeds to a single tray, wherein the vacuum cylinders have a common rotational axis about which the vacuum cylinders rotate. The automated seed planter includes a plurality of vertical seed chutes which receive seeds therein and which have open upper and lower ends. A shutter assembly of the seed planter, which is associated with the lower ends of the vertical seed chutes, selectively opens and closes the lower ends of the seed chutes to plant the seeds on a tray. The automated seed planter further includes a seed correction assembly, comprising seed wells which receive seeds therein, wherein the seed correction assembly selectively displaces one or more of the seeds from the seed wells to deliver the one or more seeds toward the tray for planting.

Though the known system reduces the chances of inadvertently not seeding a tray position, the known system cannot reliably provide information on whether each relevant position on the tray is provided with a seed, e.g. in case of a malfunction of the reseeder mechanism.

It is an object of the invention to provide seeding system which at least partially overcomes this drawback.

### Summary of the invention

To this end, according to a first aspect the invention provides a seeding system, comprising: a hopper, for holding a plurality of seeds; a seeding drum comprising an outer circumferential surface that is provided with rows of through-openings for holding seeds on said outer circumferential surface by means of vacuum suction, each row comprising at least 2 through-openings spaced apart from each other along the axis of rotation of the drum, wherein the drum is rotatable around its axis of rotation in a direction for moving each row of the rows of through-openings from a seed pickup area for picking up seeds from the hopper, via one or more seed transport areas, to a seed depositing area for depositing seeds from the row of through-openings at locations that are substantially predetermined relative to the hopper; a detector, arranged in the direction of rotation downstream of the seed pickup area and adapted for detecting, for a row of through-openings that is arranged in a seed detection area, a number of said through-openings which hold at least one seed; and wherein the system further comprises: a row discard mechanism adapted for, upon receipt of a row discard signal, discarding all seeds held on a row of through-openings at a discard area by providing a positive air pressure at said row of through-openings from an interior side of the outer circumferential surface, and otherwise for holding the seeds at said row by means of vacuum suction, wherein the discard area is arranged, along the direction of rotation, between the seed pickup area and the seed depositing area; and a controller, adapted for transmitting the row discard signal to the row discard mechanism for discarding all seeds from a row of through-openings depending on the number detected by the detector for said row of through-openings when the row was at the seed detecting area. Regardless of whether or not the row discard mechanism discards a row of seeds, the detector detects the number of through-openings of a row which hold at least one seed. Based on this number, either all seeds held on the entire row of through-openings are discarded when that row has moved on to the discard area, or that exact number of seeds is allowed to pass through the seed depositing area. Thus, the number of seeds that may pass from the seed depositing area onto locations in a tray or on a support surface is precisely known. By suitably operating the row discard mechanism, e.g. to discard a row in case not all through-openings hold a seed, it can be substantially ensured that a pre-determined number of seeds is placed onto relevant locations of the tray or support. In this manner it may be ensured that a correct number of seeds has been deposited at each of the individual locations on the tray or support surface once the tray or support has left the seed depositing area.

Contrary to the system of US 2021/0195829A1, the present invention does not require a seeding correction system that is arranged downstream of seed depositing area. The system of the invention allows checking of the number of through-openings of a row on which seeds are present to be checked and corrected, before the seeds leave the drum.

The controller may for instance be adapted for controlling the discard mechanism to discard all seeds held on an entire row if the number of through-openings of said row which hold at least one seed is less than the total number of through-openings in the row. In this manner it may be prevented that one or more of the locations where seeds should be deposited remain empty.

In an embodiment, the system further comprises a motor, e.g. an electromotor, for driving rotation of the seeding drum around its axis of rotation. Preferably, the controller is adapted for controlling the motor to drive said rotation at a substantially constant speed of rotation, in particular independent of the number detected by the detector. During use of the system, the seeding drum may thus rotate at substantially constant speed of rotation, regardless of whether the row discard mechanism discarded all seeds from an entire row of through-openings prior to said row of through openings being arranged at the seed depositing area.

In an embodiment, when seen in projection onto a horizontal plane, the seed depositing area is overlapped, preferably completely overlapped, by the drum. In this manner, the information on the number of locations of the tray or support surface at which a seed has been deposited may be known even before these locations are moved out of the seed depositing area. When seeds are deposited from the drum onto the tray or support area, the locations of the tray or support surface are preferably arranged directly below the seeding drum.

In an embodiment the detector is adapted for detecting, for the row of through-openings that is arranged in the seed detection area, a number of said through-openings which hold at least two seeds; and wherein the controller is adapted for transmitting the row discard signal to the row discard mechanism depending on said number detected by the detector for said row of through-openings when the row was at the seed detecting area. In this manner it may be prevented that two or more seeds are deposited at one or more of the locations. Especially when the seeds that are used are relatively expensive, this can result in large cost savings. For instance, the row discard signal may be transmitted in case one, two or more through-openings, of a row of through-openings each hold at least two seeds.

In an embodiment the system further comprises: a conveyor adapted for providing or supporting a moveable surface for depositing thereon seeds from the row of through-openings at the seed depositing area; wherein the controller is adapted for controlling the conveyor to move in step with the rotation of the seeding drum in case the controller, when the row was at the seed discard area, did not transmit the row discard signal to the row discard mechanism, and otherwise for delaying movement of the conveyor. During operation of the system, the seeding drum may thus continue to rotate independent of whether or not the row discard mechanism discarded all seeds from the row of through openings that has meanwhile moved onto the seed depositing area. The conveyor moves in step with the rotation of the seeding drum in case the seed discard mechanism did not discards seeds from the row that has meanwhile moved to the seed depositing area.

In an embodiment the row discard mechanism is adapted for, in case it does not receive the row discard signal, connecting the row of through-openings to a vacuum source for holding the seeds on the outer surface of the drum. Thus, when a row of through-openings passes the discard area, any seeds that are held on the through-openings remain held thereon, or the entire row of seeds is discarded so that no seed remains on any of the through-openings of the row.

In an embodiment the seeding drum further comprises: an inner circumferential surface arranged concentrically within the outer circumferential surface; and a plurality of partitioning walls between the inner and outer circumferential surface, for forming a plurality of air chambers between the inner and outer circumferential surface; wherein each row of through-openings debouches in one of said air chambers. Preferably, each air chamber is provided with one or more openings in the inner circumferential surface and/or in one or both end sides of the drum, for fluid connection with a vacuum source or pressurized air source, depending on whether the row associated with the air chamber is at the seed pickup area, the one or more seed transport areas, or the seed depositing area.

In an embodiment each air chamber is provided with one or more openings in one or both end sides of the seeding drum, the system further comprising an air divider block provided with openings or grooves, for providing the pressurized air and/or the vacuum to the openings in an end side of the seeding drum as the drum rotates around its axis of rotation relative to the air divider block. In this embodiment the air divider block preferably comprises: i) a separate opening or groove for providing a vacuum to a row of through-openings moving along the seed pickup area; ii) a separate opening or groove for providing pressurized air to a row of through-openings moving along the seed depositing area; and iii) a separate opening or groove for providing vacuum or pressurized air to a row of through-openings moving along the discard area.

In an embodiment the air divider block comprises one or more of the following: i) a separate opening or groove for providing a vacuum to a row of through-openings moving along the seed pickup area; ii) a separate opening or groove for providing pressurized air to a row of through-openings moving along the seed depositing area; iii) a separate opening or groove for providing vacuum or pressurized air to a row of through-openings moving along at the discard area. In this manner, many through-openings can be conveniently provided with vacuum air pressure for holding a seed, or with pressurized air for depositing a row of seeds or discarding a row of seeds.

In an embodiment each air chamber is provided with one or more openings in one or both end sides of the seeding drum, the system further comprising an end plate provided with openings for providing the pressurized air and/or the vacuum to the openings in an end side of the seeding drum as the drum rotates around its axis of rotation relative to the end plate.

In an embodiment the system further comprises: a vacuum source adapted for providing a negative air pressure at the rows of the through-openings at the seed pickup area and the one or more seed transport areas, for holding seeds at the rows of through-openings; a pressurized air source adapted for providing a positive air pressure at a row of the through-openings at the seed depositing area, for ejecting seeds from the row of through-openings, preferably wherein the drum is rotatable around its axis of rotation relative to the vacuum source and relative to the pressurized air source.

In an embodiment the system further comprises a discarded seed collection tray adapted for collecting seeds discarded by the row discard mechanism, preferably wherein the system further comprises a seed transport device that is adapted for transporting seeds from the discarded seed collection tray to the hopper.

In an embodiment the detector is adapted for detecting a number of through-openings of the row of through-openings holding only a single seed. Thus, if at one or more of the openings of the row no seed is detected, the controller may control the discard mechanism to discard the entire row.

In an embodiment the row discard mechanism is adapted for discarding the seeds from said entire row in case the number determined by the detector is below a row threshold. The row threshold defines how many of the through-openings of a row each hold a correct number of seeds. For instance, the correct number of seeds may be 1 or more seeds, or exactly 1 seed. This row threshold may be a predefined constant, or may alternatively be dynamically updated, e.g. based on a seed fill percentage that is updated each time seeds are deposited at the seed depositing area.

In an embodiment the controller is adapted for, each time a row of seeds is moved past the row discard mechanism to the depositing position, updating a number that is indicative of a percentage fill of seeds that have been deposited correctly. For instance, the drum may deposit seeds at tray locations of a tray which is transported by a conveyor along the depositing area. The system allows keeping track, for each row of tray locations which corresponds with a row of through-openings, how many of the tray locations were filled with the correct number of seeds. Based on this, the percentage fill may be determined. For instance, if a tray has 10x10 locations for receiving a seed, and 96 of these are filled with 1 seed, and 4 are empty, then the percentage fill is 94 percent.

Preferably, the row threshold is reduced in case the percentage fill is below a lower fill threshold, and/or wherein the row threshold is increased in case the percentage fill is above an upper fill threshold.

In an embodiment the system further comprises a user interface adapted for setting the lower and/or upper fill threshold.

In an embodiment, the seeding drum comprises at least 5 rows of through-openings.

In an embodiment, each row of through openings comprises at least 10 through-openings, preferably at least 20 through-openings.

According to a second aspect, the invention provides an assembly of an air divider block and seeding drum for use in a system according to the first aspect of the invention.

In an embodiment the seeding drum of the assembly comprises: an outer circumferential surface that is provided with rows of through-openings for holding seeds on said outer circumferential surface by means of vacuum suction, each row comprising at least 2 through-openings spaced apart from each other along the axis of rotation of the drum; an inner circumferential surface arranged concentrically within the outer circumferential surface; and a plurality of partitioning walls between the inner and outer circumferential surface, for forming a plurality of air chambers between the inner and outer circumferential surface; wherein each row of through-openings debouches in one of said air chambers; wherein each air chamber is provided with one or more openings in one or both end sides of the seeding drum; and wherein the air divider block is provided with openings or grooves, for providing the pressurized air and/or the vacuum to the openings in an end side of the seeding drum as the drum rotates around its axis of rotation relative to the air divider block.

The air divider block typically comprises:
i) a separate opening or groove for providing a vacuum to a row of through-openings moving along the seed pickup area,
ii) a separate opening or groove for providing pressurized air to a row, preferably only a single row, of through-openings moving along the seed depositing area, and
iii) a separate opening or groove for providing vacuum or pressurized air to a row, preferably only a single row, of through-openings moving along the discard area.

Preferably, the separate opening or groove for providing a vacuum to a row of through-openings moving along the seed pickup area is a continuous groove which further extends along a seed transport area for providing a vacuum to a row of through-openings moving along the seed transport area. The separate opening or groove for providing vacuum or pressurized air to a row of through-openings moving along the discard area is preferably arranged between portions of said continuous groove which are in fluid communication with each other. In this manner, a same vacuum source may be used to provide a vacuum to the row at the seed pick-up area and to the rows of through-openings at a first portion of the continuous groove, which first portion typically extends from the seed pick-up area up to the seed discard area, and to the rows of through-openings at a second portion of the continuous groove, which second portion typically extends downstream from the seed discard area up to the seep deposit area.

In an embodiment the separate opening or groove for providing vacuum or pressurized air to a row of through-openings moving along the discard area is arranged, in the direction of rotation of the drum, downstream from the seed pick-up area and upstream from the seed depositing area.

In an embodiment, the seeding drum further comprises a cover plate attached to a side of the drum proximate to the air divider block, wherein the cover plate is provided with a same or greater number of through-passages as there are air chambers in the drum, to allow each of the air chambers to be individually fluidly connected to a source of positive pressure or a source of negative pressure depending of the rotational position of the air chamber relative to the air divider block. An end plate that is provided with grooves may be attached to the cover plate.

In an embodiment, the assembly further comprises a row discard mechanism adapted for, upon receipt of a row discard signal, discarding all seeds held on a row of through-openings at a discard area by providing a positive air pressure at said row of through-openings from an interior side of the outer circumferential surface, and otherwise for holding the seeds at said row by means of vacuum suction, wherein the discard area is arranged, along the direction of rotation, between the seed pickup area and the seed depositing area; and a controller, adapted for transmitting the row discard signal to the row discard mechanism for discarding all seeds from a row of through-openings depending on the number detected by the detector for said row of through-openings when the row was at the seed detecting area. Preferably, the row discard mechanism further comprises an air switch adapted for connecting a row of through-openings at the row discard area to a pressurized air source in case of receipt of the row discard signal, and for connecting said row of through-openings at the row discard area to a vacuum source otherwise.

According to a third aspect, the invention provides a seeding system, comprising: a hopper, for holding a plurality of seeds; a seeding drum comprising rows of through-openings and arranged for picking up seeds from the hopper during rotation of the seeding drum relative to the hopper, such that the seeds are held on an outer surface of the drum by a vacuum force exerted on the seeds through the through-openings; a detector for detecting, for a row of through-openings that is arranged in a seed detection area, a number of said through-openings which hold at least one seed; and a row discard mechanism adapted for, upon receipt of a row discard signal, discarding all seeds held on a row of through-openings at a discard area by providing a positive air pressure at said row of through-openings from an interior side of the drum, and otherwise for holding the seeds at said row by means of vacuum suction, wherein the discard area is arranged, along the direction of rotation, between the seed pickup area and a seed depositing area where the seeds held on the drum may be deposited at locations that are substantially predetermined relative to the hopper; a controller, adapted for transmitting the row discard signal to the row discard mechanism depending on the number detected by the detector for said row of through-openings when the row was at the seed detecting area. It will be appreciated that embodiments of the first aspect of the invention may be combined with the system of the third aspect of the invention.

### Brief description of the drawings

Embodiments of the invention will now be illustrated in the drawings, in which like reference numerals refer to like structures, and in which:
Fig. 1 schematically shows a side view of a seeding system in accordance with an embodiment of the invention;
Fig. 2A and 2B respectively show a schematical side view of a seeding system according to another embodiment of the invention, and an isometric exploded view of parts of the seeding drum thereof;
Fig. 3 shows a side view of the air divider block of Fig. 2B in more detail.

### Detailed description of the invention

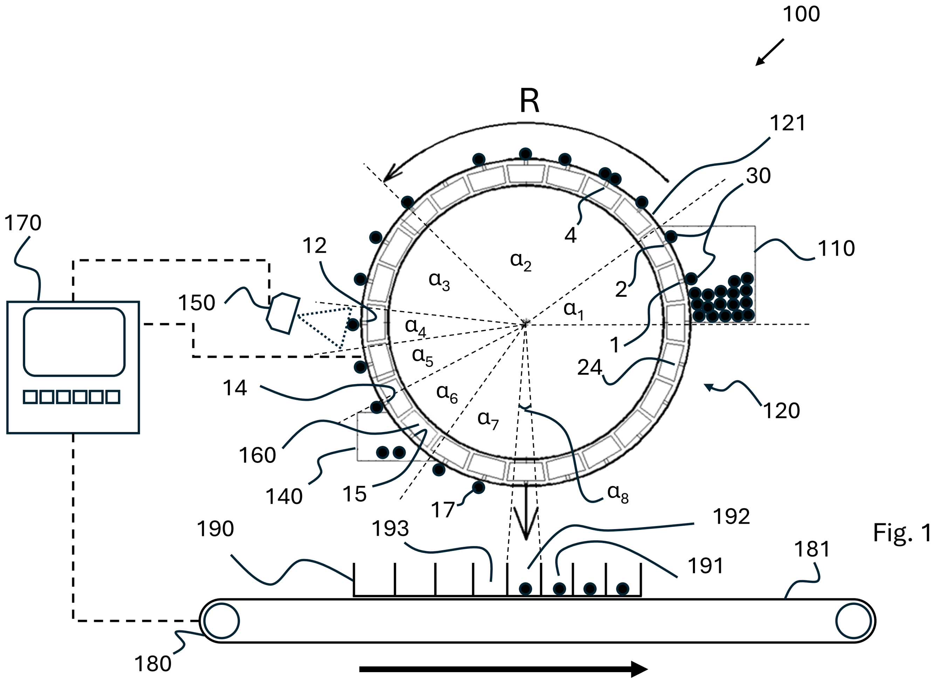

Fig. 1schematically shows a seeding system 100 according to the invention. The system 100 comprises a hopper 110 which holds a plurality of seeds 1 which are to be deposited at spaced apart locations in rows of a tray 190. The tray 190 is arranged on a moveable surface 181 of a conveyor 180. The system further comprises a seeding drum 120 which is adapted for rotating in the direction or rotation R, in such a manner that the outer circumference 121 of the seeding drum passes through the hopper 110 to allow that seeds 30 from the hopper to be picked up at rows 1,2, of through-openings in the outer circumference 120 in such a manner that the seeds are held against said outer circumferential surface. The drum comprises 24 such rows 1,2, 4, 12, 14, 15, 24 of through-openings which are evenly spaced apart from each other along the direction of rotation R. Though in this side view only one-through-opening of each row can be seen, in practice each row will have multiple through-openings. When the multiple through-openings of a row pass along the hopper 110, that row passes through a seed pick-up area defined by angle α₁, in which a lower pressure is present at the inner side of the outer circumferential surface 121 of drum 120, than outside of the drum 120, so that seeds can be picked up from the hopper at the through-openings of rows 1 and 2 by means of suction force.

Seeds that have been picked up then rotate along with the drum 120 and out of the seed pick-up area and through one or more seed transport areas, here defined by angles α₂ and α₃. As the drum 120 rotates, the rows pass through a seed detection area defined by angle α₄. A camera 150 of the system 100 is provided for detecting for an entire row at seed detection area, which in Fig. 1 is a row of through-openings 12, how many seeds are held at each through-opening on that row in the seed detection area. In this manner it can be determined how many of the through-openings of the row do not hold any seed, how many of the through-openings hold only one seed, and how many of the through-openings hold two or more seeds. When row 12 has rotated further through a further transport area defined by angle α₅ to a seed discard area defined by angle α₆, a row discard mechanism 160 of the system may be selectively activated to discard all seeds held on said row of through-openings, based on a row discard signal from the controller 170. The controller may be adapted to transmit a row discard signal to activate the row discard mechanism based on whether 1 or more of the through-openings do not hold any seed, and/or based on whether 1 or more of the through-openings hold more than one seed. For instance, an entire row of seeds may be discarded if one or more through-openings of that row do not hold any seed at all, and/or if one or more through-openings of that row hold two or more seeds.

If the discard mechanism 160 is activated to discard the entire row of seeds, then this is done by providing a positive air pressure at said row of through-openings from an interior side of the outer circumferential surface, so that the entire row of seed may be discarded into a seed collection tray 160. Additionally, a controller 170, which controls rotation of the drum 120 and controls movement of the conveyor 180, is configured such that, if the discard mechanism 160 is activated to discard the entire row of seeds 12, then when that row 12, having passed through a seed transport area defined by angle α7, reaches the seed depositing area defined by angle as, movement of the conveyor 180 is stopped or slowed to remain in step with the rotation of the drum. Thus, the drum, including row 12 from which all seeds have been discarded, will continue to rotate while the tray remains stationary relative to the axis of rotation of the drum.

In case, based on the signal from the detector 150, it is determined that all through-openings of the row hold exactly one seed each, then controller will control the conveyor to move in step with rotation of the drum, so that after depositing seeds from row 12 in the tray at the seed depositing position, the next row will be positioned to deposit seeds at a next tray position.

The controller is configured to allow a lower seed fill threshold to be set in advance for the tray 190, or for a plurality of such trays i.e. before seeds have been deposited into the tray or trays. For instance, a used may enter a lower seed fill threshold of 97% at the controller 170, to indicate at least 97% of the tray positions should be filled with exactly one seed. This will allow the controller to control the row discard mechanism to retain the row, even if one or more through-openings of the row does not contain a seed, as long as the total percentage of tray positions that is correctly filled if that row of seeds is deposited in the tray, is equal to or greater than the lower seed threshold. Thus, when seeds are to be deposited in thousands of trays, not all rows in which at least one through-opening does not hold a seed will have to be discarded, in this manner increasing the average transport speed of the trays.

The lower seed fill threshold may however be set at 100%, in which the conveyor 180 will only advance movement of a tray if all through-openings of a row hold a seed.

The device further allows the drum to be operated at a constant speed of rotation, without having to stop and start rotation of the drum, even if a row of seeds from the drum is discarded at the seed discard area.

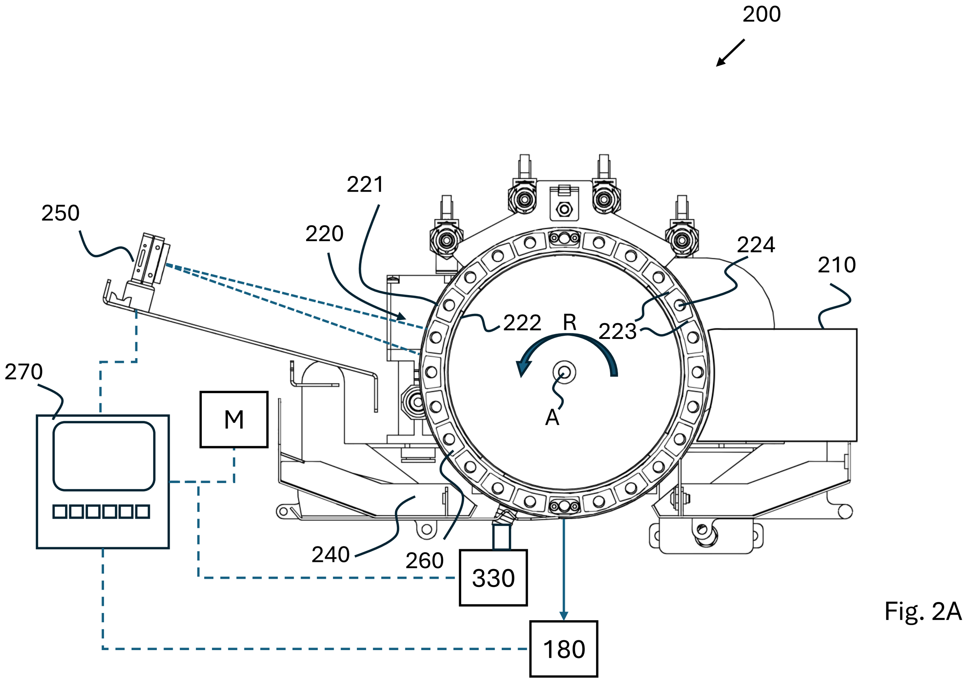

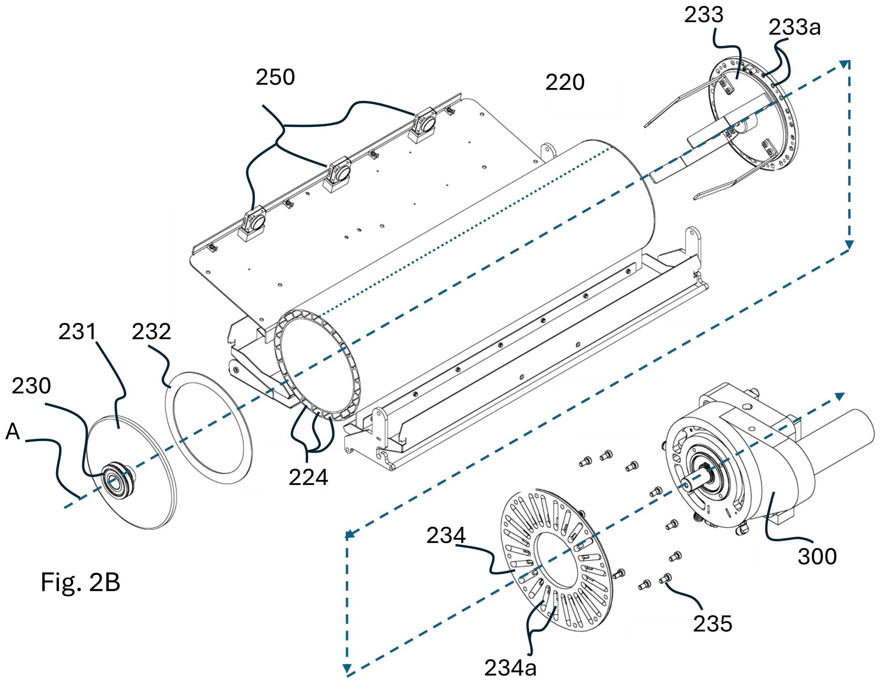

Figs. 2A and 2B respectively show a cross-sectional side view of another embodiment of a seeder system 200 of the invention, and an exploded view of said system. The side view of Fig 2A, shows a hopper 210, a drum 220 with an outer circumferential surface 221 that is provided with rows through-openings, and with a contiguously closed inner surface 222. A plurality of walls connect 223 the inner surface 222 and the outer surface 221 in such a manner that the walls and inner and outer surface together form a plurality of air chambers 224 which extend along the longitudinal direction of the drum. Through-holes of a same row of through-holes extend through the outer circumferential surface and debouch in a same air chamber. Thus, when an air chamber is rotated to a position in which it is connected to a source of negative air pressure, a suction force will be present at each through-opening of that air chamber, for picking up and/or holding a seed on the outer surface at a through-opening. When an air chamber is rotated to a position in which it is connected to a source of positive air pressure, air will be ejected through all through-openings of the corresponding row out of the air chamber, for ejecting any seeds which may be held at the corresponding row from the outer surface.

A motor M, here shown schematically, is controlled by controller 270 to rotate the drum 210 at a substantially constant speed around its axis of rotation A, in direction of rotation R, so that each row of through-openings will rotate from a seed pickup area at the hopper, to one or more seed transport areas, to a seed detection area which is in the port of view of the camera 250, then past a row discard area where seeds from a row may be selectively discarded into a seed collection tray 240, and subsequently to a seed depositing area for depositing any seeds still held on the row of through-openings onto a conveyor, here indicated schematically by reference numeral 180, which conveyor is arranged below the drum 220. It will be understood that the motor is shown

The controller 270 is configured to control the conveyor 180 to advance or not when a row of through-openings is arranged directly above the conveyor with its through-openings facing the conveyor, depending on the number of seeds detected at each through-opening by the camera 250 when that row passed by the detector 250. The selective discard mechanism 260, the location of which is schematically indicated by reference numeral 260, is in fluid connection with an air pressure switch 330, here show schematically as well, which is adapted for switching between providing a positive air pressure to any air chamber at the seed discard area, and providing a negative air pressure a to any air chamber at the seed discard area. Generally, the controller will control the air pressure switch 330 to provide a positive air pressure at the seed discard area in case an entire row of seeds is to be discarded, and will control the air pressure switch to provide negative air pressure a to any air chamber at the seed discard area in case all seeds should remain being held on through-openings of that row, for delivery to the seed depositing area just above the conveyor.

Fig. 2B shows an exploded view of the drum 220 of Fig. 2B. In the direction along the axis of rotation A, the drum 220 comprises a bearing 230, a first end plate 231 and gasket 232 which is arranged between the end plate 231 and a distal end of air chambers 224 of the drum 220. At the other end of the drum, a cover plate 233 is provided. This cover plate 233 comprises a same number of through passages 233a as there are air chambers in the drum 220, to allow the air chambers to be fluidly connected to a source of positive pressure or a source of negative pressure. The cover plate 233, together with a second end plate 234, is fixed to a distal end of the drum 220 by means of bolts 235. The second end plate 234 is provided with grooves 234a which debouch in the corresponding openings 233a of the cover plate 223 so that positive or negative pressure can be provided to the air chambers 224 via the grooves. The drum 220 and end plates 231, 234 are rotatable around the axis of rotation relative to an air divider block 300.

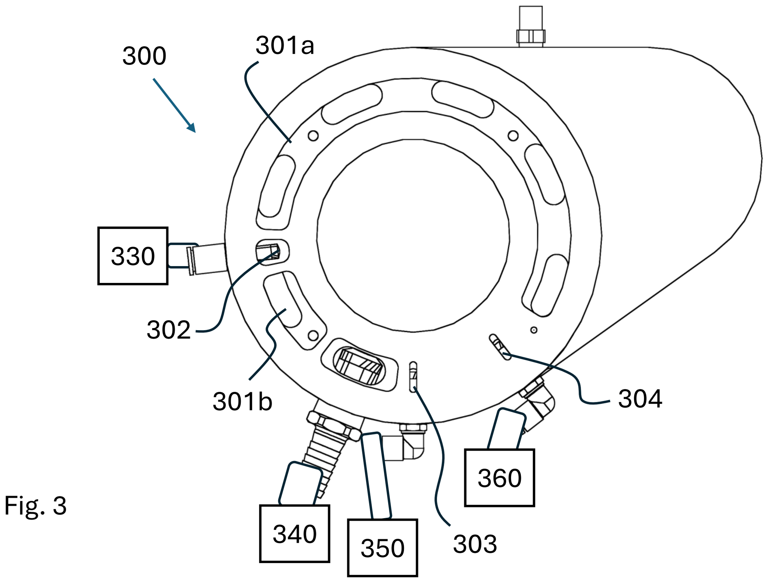

Fig. 3 shows a front view of the air divider block 300. The block comprises a first groove 301a, 301b which is in fluid communication with a vacuum source 340, for providing vacuum to any air chambers which are connected, via the openings and grooves in the cover plate 223 and end plate 234 of the drum, to the first groove. Though not visible in Fig. 3, the first groove 301 is a continuous groove, so that portions 301a and 301b thereof are in fluid communication with each other. The first groove 301a,301b is arranged for, during use of the seeding system, substantially continuously providing a vacuum to air chambers at the seed pick-up area, the seed detection area, and any seed transport areas.

The air divider block 300 further comprises a second groove 302 which is in fluid communication with the air switch 330, and is arranged for providing either a vacuum or a positive pressure to any air chamber at the seed discard area, depending on whether the seed discard mechanism is activated to discard a row of seeds or not. The second groove is not in fluid communication with the first groove 301a, 301b, so that in case the air switch 330 is set to provide a positive air pressure, e.g. pressurized air, this does not affect the negative pressure in the first groove 301a,301b.

The air divider block is further provided with a third groove 303 which is connected to a positive pressure source 350, for ejecting seeds from any rows that pass through the seed depositing area. A fourth groove 304 is in fluid connection with positive pressure source 360, for cleaning the through-openings of rows which have just passed the seed depositing area. In this manner, the row of though openings will be substantially free from debris and dirt when it returns to the seed pickup area. The pressure provided by the positive pressure source 360 is substantially higher than the pressure provided by positive pressure source 350.

## Claims

1. Seeding system (100; 200), comprising:
a hopper (110; 210), for holding a plurality of seeds (30);
a seeding drum (120; 220) comprising an outer circumferential surface (121; 221) that is provided with rows of through-openings (122; 222) for holding seeds on said outer circumferential surface by means of vacuum suction, each row comprising at least 2 through-openings spaced apart from each other along the axis of rotation of the drum, wherein the drum is rotatable around its axis of rotation in a direction (R) for moving each row of the rows of through-openings from a seed pickup area (α1) for picking up seeds from the hopper (110; 210), via one or more seed transport areas (α2, α3, α5, α7), to a seed depositing area (α8) for depositing seeds from the row of through-openings at locations that are substantially predetermined relative to the hopper (110; 220);
a detector (150; 250), arranged in the direction of rotation downstream of the seed pickup area (α1) and adapted for detecting, for a row of through-openings that is arranged in a seed detection area (α4), a number of said through-openings which hold at least one seed; and
wherein the system further comprises:
a row discard mechanism (160; 260) adapted for, upon receipt of a row discard signal, discarding all seeds held on a row of through-openings at a discard area (α6) by providing a positive air pressure at said row of through-openings from an interior side of the outer circumferential surface, and otherwise for holding the seeds at said row by means of vacuum suction, wherein the discard area (α6) is arranged, along the direction of rotation, between the seed pickup area (α1) and the seed depositing area (α8); and
a controller (170; 270), adapted for transmitting the row discard signal to the row discard mechanism (160; 260) for discarding all seeds from a row of through-openings depending on the number detected by the detector for said row of through-openings when the row was at the seed detecting area (α4).

2. Seeding system according to claim 1, wherein the detector (150; 250) is adapted for detecting, for the row of through-openings that is arranged in the seed detection area (α4), a number of said through-openings which hold at least two seeds; and wherein the controller is adapted for transmitting the row discard signal to the row discard mechanism depending on said number detected by the detector for said row of through-openings when the row was at the seed detecting area (α4).

3. Seeding system according to claim 1 or 2, further comprising:
a conveyor (180) adapted for providing or supporting a moveable surface (181; 190) for depositing thereon seeds from the row of through-openings at the seed depositing area;
wherein the controller (170; 270) is further adapted for controlling the conveyor (180) to move in step with the rotation of the seeding drum (120; 220) in case the controller, when the row was at the seed discard area, did not transmit the row discard signal to the row discard mechanism, and otherwise for delaying movement of the conveyor.

4. Seeding system according to any one of the preceding claims, wherein the row discard mechanism is adapted for, in case it does not receive the row discard signal, connecting the row of through-openings to a vacuum source for holding the seeds on the outer surface of the drum.

5. Seeding system according to any one of the preceding claims, wherein the seeding drum further comprises:
an inner circumferential surface (222) arranged concentrically within the outer circumferential surface (221); and
a plurality of partitioning walls (223,) between the inner and outer circumferential surface, for forming a plurality of air chambers between the inner and outer circumferential surface;
wherein each row of through-openings debouches in one of said air chambers,
preferably wherein each air chamber is provided with one or more openings in one or both end sides of the drum, for fluid connection with a vacuum source or pressurized air source, depending on whether the row of through-openings is at the seed pickup area, the one or more seed transport areas, or the seed depositing area.

6. Seeding system according to claim 5, wherein each air chamber is provided with one or more openings in the inner circumferential surface, for fluid connection with a vacuum source or pressurized air source, depending on whether the row of through-openings is at the seed pickup area, the one or more seed transport areas, or the seed depositing area.

7. Seeding system according to claim 5 or 6, wherein each air chamber is provided with one or more openings in one or both end sides of the seeding drum, the system further comprising an air divider block (300) provided with openings or grooves (301a,301b, 302, 303, 304), for providing the pressurized air and/or the vacuum to the openings in an end side of the seeding drum as the drum rotates around its axis of rotation relative to the air divider block,
preferably wherein the air divider block comprises:
i) a separate opening or groove (301a, 301b) for providing a vacuum to a row of through-openings moving along the seed pickup area,
ii) a separate opening (303) or groove for providing pressurized air to a row of through-openings moving along the seed depositing area, and
iii) a separate opening or groove (302) for providing vacuum or pressurized air to a row of through-openings moving along the discard area.

8. Seeding system according to any one of the preceding claims, further comprising:
a vacuum source (340) adapted for providing a negative air pressure at the rows of the through-openings at the seed pickup area and the one or more seed transport areas, for holding seeds at the rows of through-openings; and
a pressurized air source (350) adapted for providing a positive air pressure at a row of the through-openings at the seed depositing area, for ejecting seeds from the row of through-openings,
preferably wherein the drum is rotatable around its axis of rotation relative to the vacuum source and relative to the pressurized air source.

9. Seeding system according to any one of the preceding claims, wherein the row discard mechanism comprises an air switch adapted for connecting a row of through-openings at the row discard area to a pressurized air source in case of receipt of the row discard signal, and for connecting said row of through-openings at the row discard area to a vacuum source otherwise.

10. Seeding system according to any one of the preceding claims, wherein the row discard mechanism is adapted for discarding the seeds from said entire row in case the number determined by the detector is below a row threshold.

11. Seeding system according to any one of the preceding claims, wherein the controller is adapted for updating a number that is indicative of a percentage fill of seeds that have been deposited, each time a row of seeds is moved past the row discard mechanism to the depositing position without the entire row having been discarded by the row discard mechanism.

12. Seeding system according to claim 11 and 12, wherein the controller is adapted for reducing the row threshold in case the percentage fill is below a lower fill threshold, and/or for increasing the row threshold in case the percentage fill is above an upper fill threshold,
preferably wherein the seeding system further comprises a user interface adapted for setting the lower and/or upper fill threshold.

13. Assembly of an air divider block (300) and seeding drum for use in a system according to claim 1, the seeding drum comprising
an outer circumferential surface (121; 221) that is provided with rows of through-openings (122; 222) for holding seeds on said outer circumferential surface by means of vacuum suction, each row comprising at least 2 through-openings spaced apart from each other along the axis of rotation of the drum,
an inner circumferential surface (222) arranged concentrically within the outer circumferential surface (221); and
a plurality of partitioning walls (223,) between the inner and outer circumferential surface, for forming a plurality of air chambers between the inner and outer circumferential surface;
wherein each row of through-openings debouches in one of said air chambers;
wherein each air chamber is provided with one or more openings in one or both end sides of the seeding drum,
wherein the air divider block (300) is provided with openings or grooves (301a,301b, 302, 303, 304), for providing the pressurized air and/or the vacuum to the openings in an end side of the seeding drum as the drum rotates around its axis of rotation relative to the air divider block, and
wherein the air divider block comprises:
i) a separate opening or groove (301a, 301b) for providing a vacuum to a row of through-openings moving along the seed pickup area (α1),
ii) a separate opening (303) or groove for providing pressurized air to a row of through-openings moving along the seed depositing area (α8), and
iii) a separate opening or groove (302) for providing vacuum or pressurized air to a row of through-openings moving along the discard area (α6).

14. Assembly according to claim 13, wherein the separate opening or groove (301a, 301b) for providing a vacuum to a row of through-openings moving along the seed pickup area (α1) is a continuous groove which further extends along a seed transport area (α2-α5, α7) for providing a vacuum to a row of through-openings moving along the seed transport area (α2-α5, α7),
preferably wherein the separate opening or groove (302) for providing vacuum or pressurized air to a row of through-openings moving along the discard area (α6) is arranged between portions (301a, 301b) of said continuous groove, and wherein said portions (301a, 301b) are in fluid communication with each other.

15. Assembly according to claim 13 or 14, wherein the separate opening or groove (302) for providing vacuum or pressurized air to a row of through-openings moving along the discard area is arranged, in the direction of rotation of the drum, downstream from the seed pick-up area and upstream from the seed depositing area.
